# EUROPEAN PATENT APPLICATION

(11) **EP 1 647 523 A2**
(43) Date of publication of application: **19.04.2006**
(21) Application number: 05256290.7
(22) Date of filing: 10.10.2005
(51) Int. Cl.: C01D 1/42

(54) **Method for reducing corrosion in solid sodium hydroxide production**

(30) Priority: 18.10.2004 US 619867
(71) Applicant: Rohm and Haas Company, Philadelphia, PA 19106-2399 (US)
(72) Inventor: Windey, Guy Franciscus Elza, 1850 Grimbergen (BE)
(74) Representative: Kent, Venetia Katherine

(57) **Abstract**

A method for reducing corrosion in evaporators used to produce solid sodium hydroxide. The method comprises adding sodium borohydride to aqueous sodium hydroxide and evaporating water from the aqueous sodium hydroxide on a contact surface having a temperature from 300°C to 450°C.

## Description

### Background

This invention relates generally to a method for reducing corrosion in equipment used to manufacture solid sodium hydroxide by concentration of aqueous sodium hydroxide.

Concentrated aqueous sodium hydroxide (caustic) is manufactured commercially by electrolysis of brine and concentration in evaporators to produce concentrated (45-50%) aqueous sodium hydroxide. A method for reducing corrosion in evaporators by addition of sodium borohydride is disclosed in U.S. Pat. No. 4,585,579. Solid sodium hydroxide typically is produced at a purity of approximately 98% by further evaporation of water from caustic, often in two stages, with initial evaporation to approximately 75% followed by further concentration in an evaporator designed to handle solids. Evaporators used to produce solid materials are in contact with higher concentrations of aqueous sodium hydroxide than other evaporators, and also are in contact with solid sodium hydroxide. Moreover, while liquid sodium hydroxide products are produced in evaporators operating at 100-165°C, much higher temperatures are employed in evaporators used to produce solid sodium hydroxide. Production of solid sodium hydroxide is also accompanied by much higher turbulence. Corrosion of nickel or nickel-containing alloys in the evaporators used to produce solid product causes undesirable nickel contamination in the solid sodium hydroxide. Maintenance and replacement of corroded equipment can be costly and can have an adverse effect on production output

The problem addressed by this invention is corrosion of evaporator equipment under the extreme conditions used to produce solid sodium hydroxide.

### Statement of Invention

The present invention is directed to a method for reducing corrosion in evaporators used to produce solid sodium hydroxide. The method comprises adding sodium borohydride to aqueous sodium hydroxide and evaporating water from the aqueous sodium hydroxide on a contact surface having a temperature from 300°C to 450°C.

### Detailed Description

Unless otherwise specified, all percentages herein are stated as weight percentages and temperatures are in °C.

Sodium borohydride can be added to the concentrated aqueous sodium hydroxide (caustic) in any form. For example, solid sodium borohydride can be used, as well as stabilized aqueous solutions of sodium borohydride containing sodium hydroxide. Preferably, these stabilized solutions contain from 1-25% sodium borohydride and 15-50% sodium hydroxide. More preferably, stabilized aqueous solutions of sodium borohydride contain 10-25% sodium borohydride and 15-45% sodium hydroxide. One example of a stabilized sodium borohydride solution is a solution containing approximately 12% sodium borohydride and 40% sodium hydroxide. Other stabilized sodium borohydride solutions would be suitable, including approximately 20% sodium borohydride and 20% sodium hydroxide. Sodium borohydride provided in any of the forms mentioned above may be diluted with aqueous sodium hydroxide prior to or during addition to the caustic product stream.

In the method of this invention, the sodium borohydride is added to the caustic in an amount sufficient to produce a sodium borohydride concentration of at least 10 ppm in the caustic, but no more than 500 ppm. The concentration of added sodium borohydride varies within this range depending on the exact operating conditions of the evaporator. Preferably, the concentration of sodium borohydride added is at least 15 ppm, and more preferably at least 20 ppm. Preferably, the concentration of sodium borohydride added is no more than 200 ppm, and most preferably no more than 100 ppm. The actual concentration of sodium borohydride in the caustic after the addition is likely lower than the aforementioned values, and possibly even zero, due to reactions that consume sodium borohydride. Typically, liquid sodium borohydride is added using a caustic-resistant dosage pump. Dilution of liquid sodium borohydride with aqueous sodium hydroxide, e.g., 20-40% sodium hydroxide, may increase efficiency by improving mass transport of the sodium borohydride. Sodium borohydride-containing solution may be injected into the caustic process stream at any point where the equipment allows introduction of an additive. One preferred addition point is prior to the steam heat exchanger. Preferably, addition is done after the preliminary concentration of caustic to approximately 75%.

The method of the present invention is applicable to any evaporator having a contact surface, i.e., a surface in contact with liquid sodium hydroxide and having a temperature of 300°C to 450°C, that is subject to corrosion by sodium hydroxide. Materials of construction for evaporator contact surfaces include, for example, nickel alloys, such as low-carbon nickel; nickel; and stainless steels, such as E-Brite™. In a preferred embodiment of the invention, the contact surfaces are constructed of low-carbon nickel. A typical evaporator used in production of solid sodium hydroxide is a forced draft evaporator.

The method of the present invention is applicable to an evaporator operating at a contact-surface temperature from 300°C to 450°C. Preferably, the temperature is at least 350°C. Preferably, the temperature is no more than 400°C.

### Example

Concentrated caustic (75% NaOH) was treated with a solution containing 12% sodium borohydride and 40% sodium hydroxide, a solution containing 20% sodium borohydride and 20% sodium hydroxide, and with formic acid (a compound known to reduce corrosion in aqueous sodium borohydride manufacturing equipment). The treated caustic was evaporated in a forced-draft evaporator at a contact-surface temperature of 380°C. The solid sodium hydroxide products produced without any treatment of the caustic, with treatment by formic acid, and with treatment by sodium borohydride were analyzed for nickel content by inductively-coupled plasma atomic emission spectroscopy (ICP), before (Initial Ni level) and after treatment (Final Ni level), to give the results displayed in the Table below.

**Table**

| Treatment (NaBH₄ level added to caustic) | Initial Ni level | Final Ni level |
|---|---|---|
| None | 6 ppm | 6 ppm |
| Formic acid | | 3 ppm |
| 12% NaBH₄/40% NaOH (23 ppm NaBH₄) | 11.5 ppm | 0.5 ppm |
| 20% NaBH₄/20% NaOH (30 ppm NaBH₄) | 8 ppm | 0.8 ppm |

| | | |
|---|---|---|
| Notes: Initial levels of Ni in the product varied somewhat, probably due at least in part to varying levels of Ni present in the 75% caustic. The final Ni level reported is the average of the approximately steady-state levels attained after addition of NaBH₄, usually after several days. Analysis of boron levels in the solid caustic, with back-calculation, revealed that some boron is consumed in reactions with the evaporator surface. For example, a treatment rate of 23 ppm NaBH₄ based on 75% caustic would be expected to yield 31 ppm boron (calculated as NaBH₄) in the final solid NaOH product if all of the boron were concentrated into and remained in the solid NaOH. Instead, based on the total boron in the solid NaOH product, the concentrations of NaBH₄ was 14 ppm. Likewise, a treatment rate of 30 ppm in the liquid caustic would be expected to yield 40 ppm in the solid NaOH; however, the actual boron content was only 24 ppm, calculated as NaBH₄. | | |

## Claims

1. A method for reducing corrosion in evaporators used to produce solid sodium hydroxide; said method comprising adding sodium borohydride to aqueous sodium hydroxide and evaporating water from said aqueous sodium hydroxide on a contact surface having a temperature from 300°C to 450°C.

2. The method of claim 1 in which sodium borohydride is added to said aqueous sodium hydroxide in a concentration of at least 10 ppm in said aqueous sodium hydroxide, and no more than 500 ppm.

3. The method of claim 2 in which sodium borohydride is provided as a stabilized aqueous solution.

4. The method of claim 3 in which the temperature is from 350°C to 400°C.

5. The method of claim 4 in which contact surfaces of the evaporator are constructed of a nickel alloy.

6. The method of claim 5 in which the stabilized aqueous solution contains 1-25% sodium borohydride and 15-50% sodium hydroxide.

7. The method of claim 6 in which said aqueous sodium hydroxide has an initial concentration of 75%.
